# EUROPÄISCHE PATENTANMELDUNG

(11) **EP 1 787 842 A2**
(43) Veröffentlichungstag der Anmeldung: **23.05.2007**
(21) Anmeldenummer: 06023890.4
(22) Anmeldetag: 17.11.2006
(51) Int. Cl.: B60J 7/12

(54) **Runge für einen Planenaufbau**

(30) Priorität: 22.11.2005 DE 202005018342 U
(71) Anmelder: Edscha LKW-Schiebeverdecke GmbH, 42855 Remscheid (DE)
(72) Erfinder: Remmel, Lars, 42897 Remscheid (DE)
(74) Vertreter: Sparing, Rolf Klaus

(57) **Zusammenfassung**

Die Erfindung betrifft eine Runge für einen Planenaufbau, umfassend ein erstes Rungenteil (21), ein zweites Rungenteil (22), und eine Hubeinrichtung (30), bei der ein Betätigungshebel (31) an einem des ersten und des zweiten Rungenteils (21, 22) angelenkt ist und mit dem anderen des ersten und des zweiten Rungenteils (21, 22) in Eingriff bringbar ist. Eine Runge, die ein einfaches und sicheres Verändern der Rungenlänge ermöglicht, wird erfindungsgemäß dadurch geschaffen, dass das andere Rungenteil (21) eine Verzahnung (24) aufweist, in die ein dem Betätigungshebel (31) zugeordnetes Eingriffsende (37) ansetzen kann.

## Beschreibung

Die Erfindung betrifft eine Runge für einen Planenaufbau nach dem Oberbegriff des Anspruch 1.

Rungen werden zum Abstützen von horizontalen Trägern von Planenaufbauten z.B. Schiebeverdecken vorgesehen. Ein solcher Planenaufbau kann für Aufbauten von Lastkraftfahrzeugpritschen oder von Sattelaufliegern ausgeschaltet sein, aber auch bei Containern und Eisenbahnwaggons. Bei Schiebeverdecken sind, um diese schnell beladen oder entladen zu können, die von den Trägern herabhängenden Seitenplanen zusammenschiebbar, und auch die zwischen den Längsträgern verlaufende Dachplane kann mittels verfahrbarer Spriegel, an denen die Dachplane festgelegt ist, zusammengeschoben werden. Um den Zugang zum Laderaum weiter zu verbessern, sind die Verdeckgestelle der Schiebeverdecke leicht demontierbar ausgestaltet. Um das Be- und Entladen zu vereinfachen, weisen die Rungen, insbesondere die Eckrungen, eine Hubeinrichtung auf, die es ermöglicht, dass die Runge wenigstens eine nicht angehobene Stellung und eine angehobene Stellung aufweist, wodurch der Zugriff auf die Ladefläche zum Be- und Entladen vereinfacht ist.

Aus der Praxis sind Rungen für Planenaufbauten bekannt, bei denen ein erstes Rungenteil und ein zweites Rungenteil, dass verschieblich in dem ersten Rungenteil angeordnet ist, vorgesehen sind. Das erste Rungenteil und das zweite Rungenteil sind dabei mittels einer Hubeinrichtung miteinander verbunden. Die Hubeinrichtung weist einen schwenkbar an dem ersten Rungenteil gelagerten Hebel auf, der gelenkig mit dem zweiten Rungenteil verbunden ist. Beim Verschwenken des Hebels von einer ersten Stellung in eine zweite Stellung wird das zweite Rungenteil bezüglich des ersten Rungenteils verschoben, wobei die Länge der Runge verändert wird. Der Hebel der Hubeinrichtung ist in der ersten Stellung und in der zweiten Stellung verriegelbar.

DE 43 21 516 C1 zeigt eine Runge für einen Planenaufbau, bei dem ein erstes Rungenteil und ein zweites Rungenteil verschieblich zueinander vorgesehen sind. Das erste Rungenteil und das zweite Rungenteil sind mittels einer Hubeinrichtung miteinander gekoppelt. Die Hubeinrichtung weist einen Hebel auf, der schwenkbar an dem ersten Rungenteil angeordnet ist. Der Hebel ist mit dem zweiten Rungenteil gekoppelt. Das zweite Rungenteil und das erste Rungenteil sind mittels einer Arretiervorrichtung zueinander festlegbar.

DE 100 43 296 A1 zeigt eine Runge für einen Planenaufbau, bei der ein erstes Rungenteil und ein zweites Rungenteil beweglich zueinander gekoppelt sind. Das erste Rungenteil und das zweite Rungenteil sind mittels einer Hubeinrichtung miteinander gekoppelt, wobei die Hubeinrichtung ein das erste Rungenteil und das zweite Rungenteil koppelndes Verschiebeelement aufweist. Die beiden Rungenteile sind mittels des Verschiebeelements zueinander verschieblich, wobei das Verschiebeelement eine Arretiervorrichtung zum Festlegen des ersten Rungenteils und des zweiten Rungenteils aufweist. Die Arretiervorrichtung umfasst eine Lochreihe, in die ein Haltebolzen einsetzbar ist.

Es ist die Aufgabe der Erfindung, eine Runge für einen Planenaufbau nach dem Oberbegriff des Anspruch 1 anzugeben, die ein einfaches und sicheres Verändern der Rungenlänge ermöglicht.

Diese Aufgabe wird bei der eingangs genannten Runge erfindungsgemäß mit den kennzeichnenden Merkmalen des Anspruch 1 gelöst.

Die erfindungsgemäße Runge ermöglicht es, über die Verzahnung das obere Rungenteil in einer der Teilung der Verzahnung entsprechenden Mehrzahl von Höhen anzuheben, indem das Eingriffsende des Betätigungshebels entsprechend angesetzt und das obere Rungenteil entsprechend angehoben bzw. wieder abgesenkt wird. Durch eine entsprechende Verzahnung werden eine Vielzahl von Höhen einstellbar, ohne dass für das Einstellen dieser Höhe jeweils Bolzen umgesteckt werden müssten oder die für einen Normalfahrbetrieb erforderlichen Sicherheitseinrichtungen erforderlich werden. Vielmehr ermöglicht die Einleitung der Gewichtskraft des angehobenen oberen Rungenteils über die Hubeinrichtung in das untere Rungenteil einen für kurze Strecken oder zum Be- und Entladen ausreichenden Kraftfluss, wobei vorzugsweise der Betätigungshebel in der angehobenen Stellung der Runge verriegelt werden kann, um ein versehentliches Abrutschen des angehobenen Rungenteils zu verhindern.

Die erfindungsgemäße Runge ermöglicht mit einfachen mechanischen Mitteln eine kostengünstige und effiziente Möglichkeit zum Erhöhen der Runge und damit des Verdeckgestells in einer Vielzahl von unterschiedlichen Höhen, wodurch eine große Flexibilität bei der Handhabung erreicht wird. Es ist insbesondere vorteilhaft möglich, die Hubeinrichtung von Hand zu betätigen, wodurch eine aufwendige und teure Hydraulik eingespart werden kann.

Vorzugsweise umfasst die Runge eine Verriegelungseinrichtung, die immer dann in die Verzahnung eingreift, wenn ein Zahnpaar an der Verriegelungseinrichtung vorbei verlagert wurde, so dass bei absichtlicher oder versehentlicher Entlastung der Hubeinrichtung die Verriegelungseinrichtung die gegenseitige Festlegung des ersten und des zweiten Rungenteils übernimmt und ein Durchrutschen verhindert. Hierdurch wird eine Absicherung nach Art einer Spannratsche erreicht, so dass es möglich ist, die Runge in einem oder mehreren Hüben der Hubeinrichtung mit dem Betätigungshebel anzuheben und so die erforderliche Kraft besser zu dosieren. Des weiteren wird das angehobene Rungenteil von der Verriegelungseinrichtung blockiert, so dass es erforderlich ist, zum Auslösen der Verriegelungseinrichtung mit der Hubeinrichtung das angehobene Rungenteil zunächst anzuheben und so die Verriegelungseinrichtung kraftfrei zu stellen. Hierdurch wird vorteilhaft erreicht, dass ein versehentliches Auslösen und damit unbeabsichtigtes Herabrutschen des angehobenen Rungenteils wirksam verhindert ist.

Die Verzahnung weist zweckmäßigerweise einen hinterschnittenen Bereich auf, in den ein Riegelzapfen der Verriegelungseinrichtung oder ein anderes Ende des Betätigungshebels eingreifen können. Hierbei wird zweckmäßigerweise der Riegelzapfen und das Eingriffsende als zylindrischer Bolzen ausgebildet sein, die denselben oder nahezu denselben Durchmesser aufweisen und damit möglichst formschlüssig in den hinterschnittenen Bereich hineingreifen können. Insgesamt weisen die Zähne der Verzahnung vorteilhaft eine gegenüber der Horizontalen abwärts weisende Neigung auf, die es ermöglicht, relativ leicht über den nach oben weisenden Flankenbereich der Zähne außer Eingriff zu gleiten, während der nach unten weisende Flankenbereich der Zähne einen Hinterschnitt bildet, wodurch die Verzahnung angehoben werden muss, um das entsprechende Riegel- oder Eingriffsglied außer Eingriff zu bringen.

Ein günstiges Einsatzgewicht wird dadurch erreicht, dass die Verzahnung zwei parallele Zahnreihen mit zweckmäßigerweise identischer Teilung aufweist, die einander gegenüberliegend und vertikal verlaufend derart vorgesehen sind, dass ein Paar gegenüberliegender Zähne jeweils zum Greifen von Eingriffsende bzw. Riegelzapfen vorgesehen sind. Alternativ können auch Stufungen mit durchgehenden Zähnen wie bei einer Zahnstange vorgesehen werden.

Die Hubeinrichtung umfasst neben dem Betätigungshebel zweckmäßigerweise mindestens einen Zwischenhebel, der vorzugsweise in fester Höhe an dem ersten Rungenteil angeordnet ist und dessen Gelenkachse mit dem Betätigungshebel die Hebelachse des Betätigungshebels beim Eingreifen in die Verzahnung darstellt. Hierbei ist vorzugsweise der Zwischenhebel kürzer als der Betätigungshebel ausgebildet und näher am Eingriffsende als am Griff angelenkt, wodurch eine günstige Übersetzung zum Anheben des zweiten Rungenteils erreicht wird. Die Anlenkung des Zwischenhebels an dem ersten Rungenteil erfolgt zweckmäßigerweise in etwa in der Höhe, die der Höhe der Verzahnung entspricht.

Die Verriegelungseinrichtung weist zweckmäßigerweise ein schwenkbares Wippenglied auf, das an einem ersten Hebelarm eineb Riegelzapfen für die Verzahnung aufweist und das an einem zweiten Hebelarm ein Auslöseglied aufweist, das zur Freigabe des Angriffsteils von der Verzahnung betätigbar ist. Hierbei ist vorzugsweise die Materialverteilung des Wippenglieds derart gewählt, dass eine Vorspannung aufgrund des Drehmoments um die Schwenkachse des Wippenglieds in Eingriffsrichtung mit der Verzahnung besteht, das vorteilhaft noch durch eine Feder unterstützt oder ersetzt werden kann, wobei diese Vorspannung durch ein Drücken des zweiten Hebelarms überwunden werden kann, um die Verzahnung freizugeben. Um ein gewaltsames Auslösen des Auslöseglieds bei eingeratetem Reigelzapfen zu vermeiden, ist das Auslöseglied mit einer Materialschwächung ausgebildet, so dass es sich bei verriegelter Wippe eher verformt als diese auszuklinken.

Es ist vorteilhaft möglich, die Hubeinrichtung mit dem Betätigungshebel und dem Zwischenhebel parallel zu der Runge abzulegen, wobei die Länge des Betätigungshebels in etwa genau so lange wie die Länge der Verzahnung gewählt ist, damit beide in Ausgangslage in etwa in Höhe des unteren Endes des unteren Rungenteils in Anlage gelangen können. Befindet sich die Verzahnung und damit das obere Rungenteil in einer angehobenen Stellung, lastet die Gewichtskraft des angehobenen Teils auf dem Betätigungshebel, so dass zweckmäßigerweise eine Verriegelung an dem unteren Bereich der Runge vorgesehen ist, um ein Aufspringen zu vermeiden.

Zweckmäßigerweise ist an dem einen Rungenteil ein Lagerbock angeordnet, der zum einen die Verzahnung führt und an dem zum anderen die Hubeinrichtung und die Verriegelungseinrichtung schwenkbar gelagert sein können. Der Lagerbock wird mit dem einen Rungenteil nach Bedarf fest verbunden, zweckmäßigerweise in einer Höhe, die in etwa der Höhe der Verzahnung entspricht. Hierdurch wird ein Kontakt zwischen dem einen Rungenteil und der Verzahnung im wesentlichen durch den Lagerbock erreicht, der dadurch eine Führung bildet, und es können zum anderen beliebige Profile von einen Rungenteilen mit dem Lagerbock einerseits und beliebige Profile von anderen Rungenteilen mit der Verzahnung andererseits kombiniert werden. Durch das Vorsehen eines Lagerbockes, an dem wenigstens eines von Hubeinrichtung und Verriegelungseinrichtung gelagert sind, werden die beim Anheben des oberen Rungenteils von der Hubeinrichtung und ggf. von der Verriegelungseinrichtung aufgenommenen Kräfte gleichmäßig in die eine Runge eingeleitet, ohne dass es zu örtlichen Überbeanspruchungen kommt. Es versteht sich, dass anstelle des Lagerbocks auch entsprechende Lageraugen für die schwenkbar angeordneten Betätigungseinrichtungen (Hubeinrichtung und Verriegelungseinrichtung) vorgesehen seien, wobei der Montageaufwand bei Vorsehen eines Lagerbocks vorteilhaft herabgesetzt ist. Um eine günstige Krafteinleitung zu erreichen ist es zweckmäßig, dass der Lagerbock fest mit dem einen Rungenteil verbunden wird, bspw. durch Schweißen. Es ist aber auch möglich, durch Verriegelung mittels Bolzen oder dergleichen die Verbindung herzustellen. Besonders günstig ist das Anordnen der Betätigungseinrichtungen auf derselben Achse.

Zweckmäßigerweise ist das andere Rungenteil vorzugsweise gelenkig mit der Verzahnung verbunden, so dass wiederum eine Mehrzahl von Profilen für das andere Rungenteil mit der selben (mit dem Lagerbock zusammenwirkenden) Verzahnung kombiniert werden können. Hierbei kommt neben einer gelenkigen Verbindung auch eine Kraft und/oder formschlüssige Verbindung von Verzahnung und anderem Rungenteil in Betracht.

Vorzugsweise ist in einem unteren Abschnitt des einen Rungenteils eine Auflage für die Verzahnung vorgesehen, wenn diese nicht angehoben ist. Dann ist die Hubeinrichtung im wesentlichen kraftfrei gestellt, und die Gewichtskraft des anderen Rungenteils wird über die Verzahnung auf die Auflage in formschlüssiger Weise ohne Beanspruchung von Gelenkverbindungen übertragen, wobei diese nicht angehobene Stellung für den Fahrbetrieb bevorzugt ist. Die Auflage kann als eingeschweisstes Teil in der einen Runge vorgesehen sein, ferner als Abfaltung des Rungenteils oder aber als eckiger und vorzugsweise runder Bolzen, der durch eine Lochung des unteren Rungenteils hindurchsteckbar und zweckmäßigerweise durch einen Stift verriegelbar ist, um eine Lösung während des Fahrbetriebs zu verhindern. Hierbei ermöglicht das Einstecken des Bolzens das Vorsehen von mehreren Lochungen, die bevorzugten Höhen für einen Fahrbetrieb entsprechen, so dass bestimmte Über-Höhen ohne Belastung der Hubeinrichtung einstellbar sind.

Durch die erfindungsgemäß ausgebildete Runge lässt sich vorteilhaft ein Verfahren betreiben, bei dem das Anheben der Runge gleichzeitig über mehrere Zahnteilungen möglich ist, während beim Absenken jeweils jede Zahnteilung einzeln freigegeben werden muss. Bei einem kraftaufwendigen Hub kann durch die Verriegelungseinrichtung vorteilhaft kurzfristig abgesetzt werden, während beim Absenken eine schlagartige Belastung der Hubeinrichtung allenfalls ein Absenken um eine Zahnteilung bewirkt, weil dann die Last wieder von der Verriegelungseinrichtung aufgenommen wird.

Weitere Vorteile und Merkmale der Erfindung ergeben sich aus der nachfolgenden Beschreibung sowie aus den abhängigen Ansprüchen.

Die Erfindung wird nachstehend unter Bezugnahme auf die anliegenden Zeichnungen anhand eines bevorzugten Ausführungsbeispiels einer erfindungsgemäßen Runge näher erläutert.
- Fig. 1: zeigt eine perspektivische Ansicht eines Verdeckgestells mit in der Höhe veränderlichen Rungen.
- Fig. 2: zeigt eine seitliche Ansicht einer erfindungsgemäßen Runge des Verdeckgestells aus Fig. 1.

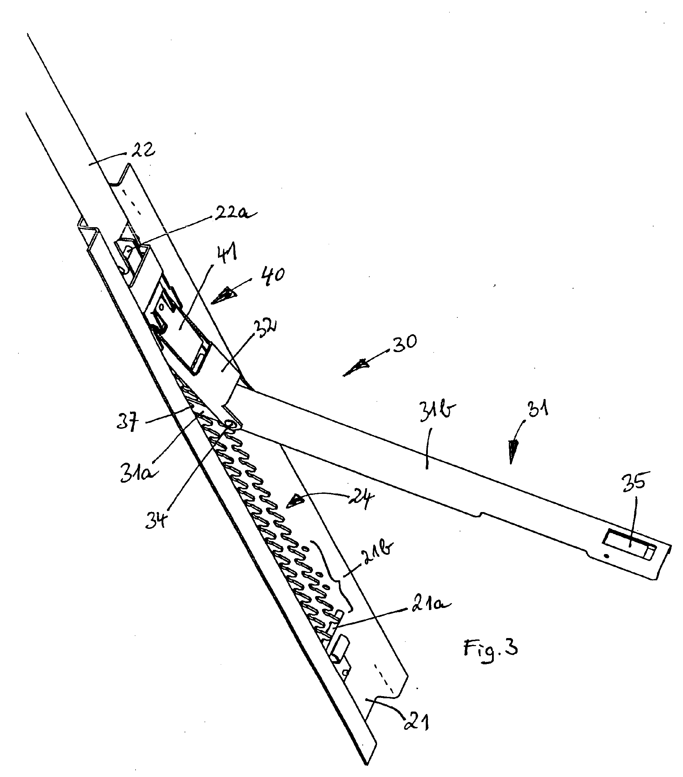

- Fig. 3: zeigt eine perspektivische Ansicht des unteren Bereichs einer Runge gemäß Fig. 2.
- Fig. 4: zeigt eine vergrößerte Einzelheit der Hubeinrichtung der Runge aus Fig. 2.
- Fig. 5: zeigt eine vergrößerte Einzelheit der Verriegelungseinrichtung der Runge aus Fig. 2 mit weggelassener Hubeinrichtung im entriegelten Zustand.

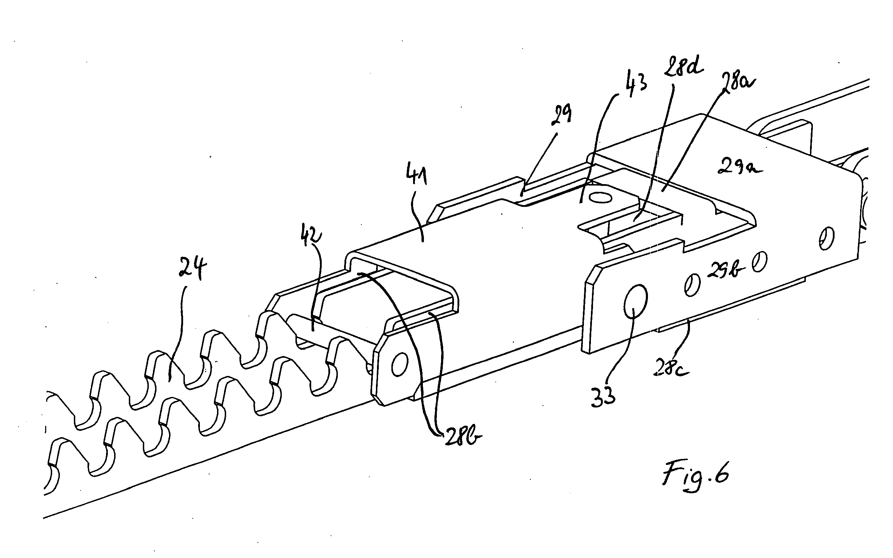

- Fig. 6: zeigt eine vergrößerte Einzelheit der Verriegelungseinrichtung der Runge aus Fig. 2 mit weggelassener Hubeinrichtung im verriegelten Zustand.

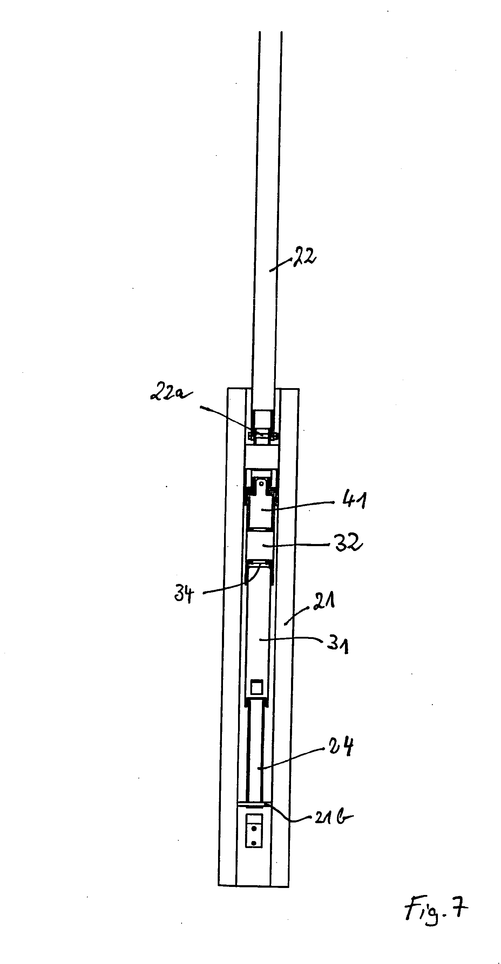

- Fig. 7: zeigt eine frontale Ansicht auf die Runge gemäß Fig. 2.
- Fig. 8: zeigt die Runge aus Fig. 2 aus einer anderen Perspektive.

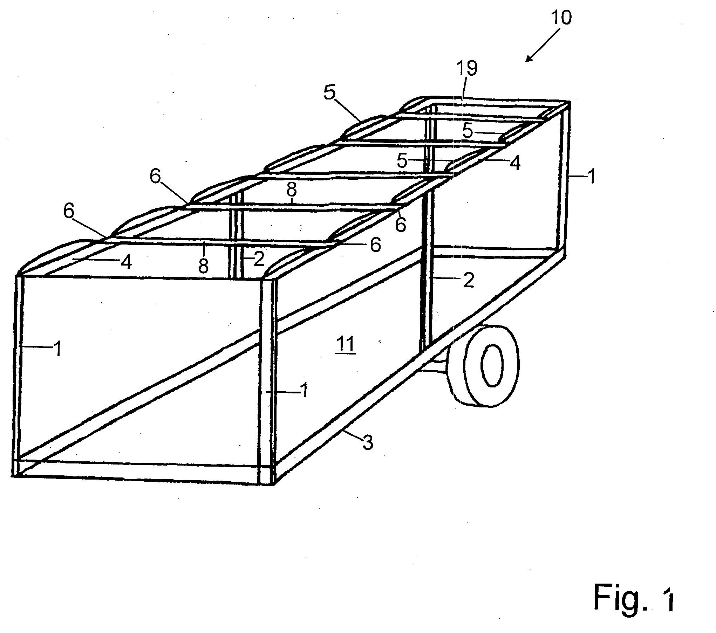

Der in Fig. 1 schematisch dargestellte Planenaufbau, bei dem es sich vorliegend um einen Sattelauflieger handelt, umfasst ein insgesamt mit 10 bezeichnetes Verdeckgestell, welches ein Fahrzeugchassis 3 überbaut, wobei eine Ladeplattform 11 Eckrungen 1 und Mittelrungen 2 abstützt, die zwei seitliche Längsträger 4, die in Fahrzeugrichtung verlaufen, abstützen. Der Längsträger 4 besteht aus zwei Teilen, die sich jeweils bis zur Mitte erstrecken und die sich auf einer gemeinsamen Mittelrunge 2 abstützen. Aus Gründen der Übersichtlichkeit sind nur zwei Mittelrungen 2 dargestellt, es versteht sich, dass mehrere Mittelrungen 2 vorgesehen sein können.

Zwischen den parallelen Längsträgern 4 erstrecken sich quer zur Fahrtrichtung verlaufende Spriegel 8, die endseitig jeweils einen Schlitten 6 aufweisen und die insgesamt eine mit 5 bezeichnete Dachplane abstützen. Die Spriegel 8 sind über die Spriegel 8 an entsprechenden Laufbahnen der Längsträger 4 in Fahrtrichtung verschieblich, wobei hierzu die Plane 5 zwischen benachbarten Spriegeln nach oben zwangsgefaltet wird. Zum Verriegeln der Dachplane ist im hinteren Bereich des Verdeckgestells, 10 ein Portalelement 19 vorgesehen. Das Portalelement 19 ist an einem vorderen Spriegel 8 schwenkbar angelenkt.

Die Eckrungen 1 und die Mittelrungen 2 sind in der Höhe veränderbar ausgeführt, wobei die Mittelrungen hierfür in konventioneller Weise aus einem unteren Rungenteil und einem oberen Rungenteil bestehen, die über einen Riegelzapfen gegenseitig fixiert werden. Damit ist insbesondere gewährleistet, dass die Mittelrungen 2 an verschiedene Bauhöhen der Längsträger 4 angepasst werden kann.

In besonderen Fällen kann es jedoch vorkommen, dass die Höhe der Längsträger 4 bei einem bestehenden Planenaufbau erhöht wird. Dies ist zum einen dann der Fall, wenn für bestimmte Transporte ein erhöhter Laderaum erforderlich ist. Dies ist zum anderen der Fall, bei denen das Be- und Entladen des transportierten Guts höher angeordnete Längsträger erfordert. Hierbei wird meist eine Seite des Verdeckgestells angehoben, um Ladegüter, die bis unter die Dachplane 5 bzw. die Spriegel 8 reichen, noch hinter bzw. innerhalb der Längsträger 4 anordnen zu können, wobei die Längsträger 4 beim Be- oder Entladen angehoben werden müssen, um sowohl die Ladehöhe des Ladeguts als auch den erforderlichen Hub beispielsweise eines Gabelstaplers, noch zu übertreffen.

Während die Mittelrunge 2 zur Höhenverstellung und gegenseitigen Verriegelung an den oberen und unteren Rungenteilungen Lochungen aufweist, die definierte Höhen defiieren, ermöglicht die Ausgestaltung der Eckrungen eine einfache und sichere Betätigung nach Art einer Spannratsche.

Eine Eckrunge 1 ist jeweils aus einem unteren Rungenteil 21 und einem oberen Rungenteil 22 gebildet. Die Ausgestaltung der beiden Rungenteile 21, 22 kann in verschiedener Weise erfolgen, wobei in dem vorliegenden Ausführungsbeispiel das obere Rungenteil 22 eine U-förmige Gestalt aufweist, während das untere Rungenteil 21 als Omega-Profil mit einer U-förmigen Rinne und parallel zur Basis der Rinne von den oberen Kanten der Schenkel der Rinne flächige nach aussen abstehenden Elemente gebildet ist, die ungefähr mit der nach außen weisenden Basis des U des oberen Rungenteils fluchten. Es versteht sich, dass für das untere Rungenteil 21 und das obere Rungenteil 22 eine Mehrzahl von anderen Gestaltungen in Betracht kommen, zum Beispiel Rohre, Winkelprofile und andere in der Praxis bekannte Profile. Das obere Ende des oberen Rungenteils 22 weist (nicht dargestellte) Anschläge auf, mit denen die Längsträger 4 von unten abgestützt werden. Es ist möglich, neben der kraftschlüssigen Abstützung auch einen Formschluss, entweder im Wege einer Verriegelung mittels Zapfen oder Hinterschnitts oder eines anderen Zusammensteckens der Teile 22, 4 vorzusehen, weiterhin können in entsprechenden Laufbahnen der Längsträger verfahrbare Rollen vorgesehen sein, wie dies bei Mittelrungen 2 üblicherweise der Fall ist.

Das obere Rungenteil 22 ist über eine Gelenkverbindung 22a mit einer nach unten vorstehenden Verzahnung 24 verbunden, so dass die Verzahnung 24 an beliebige Profile von oberen Rungenteilen 22 angeschlossen werden kann und dadurch eine modulare Bauweise ermöglicht ist. Es ist möglich, auch eine nicht gelenkige Verbindung statt der Gelenkverbindung 22a vorzusehen. Um ein Ausknicken an der Gelenkverbindung 22a zu verhindern, ist das obere Rungenteil 22 an dem unteren Rungenteil 21 in einem weiter oben angeordneten (nicht dargestellten) Bereich nochmals axial geführt.

An dem unteren Rungenteil 21 ist ein Lagerbock 20 befestigt, vorliegend durch Einschweißen. Es kommt aber auch eine mechanische Verriegelung in Betracht, ebenso kann der Lagerbock 20 einstückig mit dem unteren Rungenteil 21 hergestellt sein. Der Lagerbock 20 weist eine Führung für die Verzahnung 24 auf.

Durch das separate Herstellen der Profile für die Rungenteile 21, 22 einserseits und von zusammenwirkenden Lagerbock 20 und Verzahnung 24 andererseits entsteht eine kostengünstige Modul-Konzept, wobei konventionelle Eckrungen mit denselben Rungenteilen 21, 22 und einer anderen Führung bzw. Gestänge hergestellt werden können, die keine Ratschenfunktion aufweist.

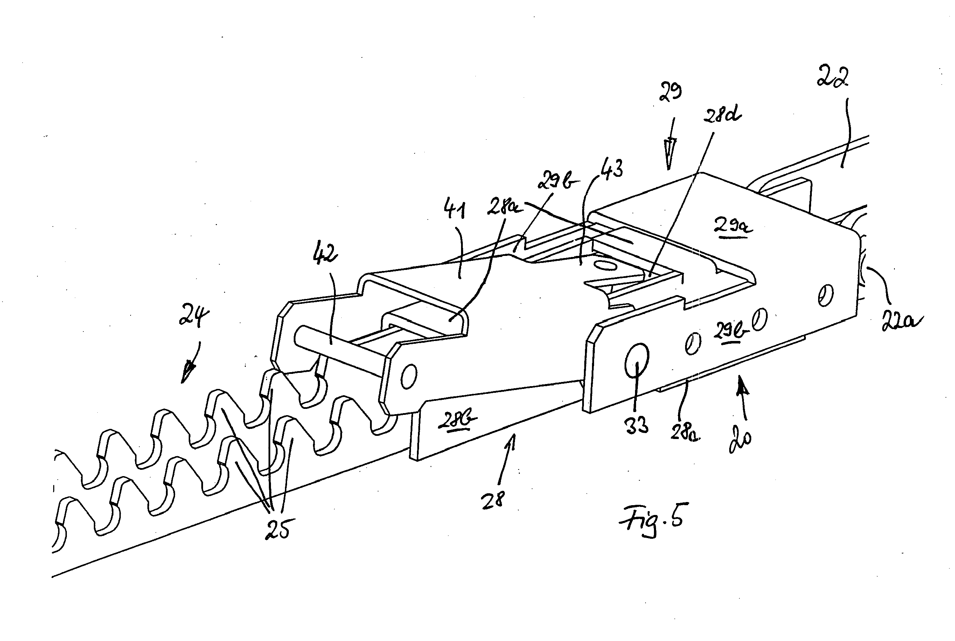

Wie insbesondere in Fig. 5 gut zu erkennen ist der Lagerbock 20 aus einem inneren, Omega-förmigen Blechfaltteil 28, und einem äusseren, U-förmigen Blechfaltteil 29 gebildet. Das innere Blechfaltteil 28 führt in seiner zentralen Ausbauchung die Verzahnung 24, während von den beiden an die Basis 28a der Ausbauchung anschliessenden parallelen Schenkel 28b Flügel 28c abstehen, wobei die Flügel 28c eine Auflage für das äussere Blechfaltteil 29 bilden. Im Bereich der Basis 28a ist ein Bereich 28d ausgeschnitten. Das äussere Blechfaltteil 29 weist eine Basis 29a auf, die parallele Schenkel 29b miteinander verbindet. Die nach aussen weisende Seite der Schenkel 29b wird mit dem unteren Rungenteil 21 veschweisst. Die Schenkel 28b und 29b sind jeweils paarweise parallel und beabstandet zueinander angeordnet. Zwischen benachbarten Schenkel 28b und 29b ist jeweils ein Achsenabschnitt 33 durch Vernietung angeordnet.

An dem Lagerbock 20 und damit an dem unteren Rungenteil 21 ist eine Hubeinrichtung 30 angeordnet, ferner eine Verriegelungseinrichtung 40.

Die Hubeinrichtung 30 weist einen Zwischenhebel 32 auf, der auf den beiden Achsenabschnitten 33 des Lagerbocks 20 angelenkt ist. An dem Lagerzapfen 33 ist der Zwischenhebel 32 schwenkbar befestigt. Der Zwischenhebel 32 weist einen Hebelzapfen 34 auf, um den ein Betätigungshebel 31 schwenkbar angeordnet ist. Der Betätigungshebel 31 weist einen kurzen Hebelarm 31 a und einen langen Hebelarm 31 b auf, an dessen freiem Ende ein Betätigungsgriff 35 angeordnet ist, der ein Klammerelement 36 aufweist, welches federnd im unteren Bereich des unteren Rungenteils 21 festgelegt werden kann. Hierzu ist im unteren Bereich der unteren Runge 21 ein Sicherungsteil 21c vorgesehen, das den Betätigungshebel formschlüssig greift. Bei abgelegtem Betätigungshebel 31 wird dieser im wesentlichen parallel zu dem Zwischenhebel 32 und zu dem unteren Rungenteil 21 mittels des am Betätigungsgriffs 35 oder an dem unteren Rungenteil 21 vorgesehenen Klammerglied 36 fixiert.

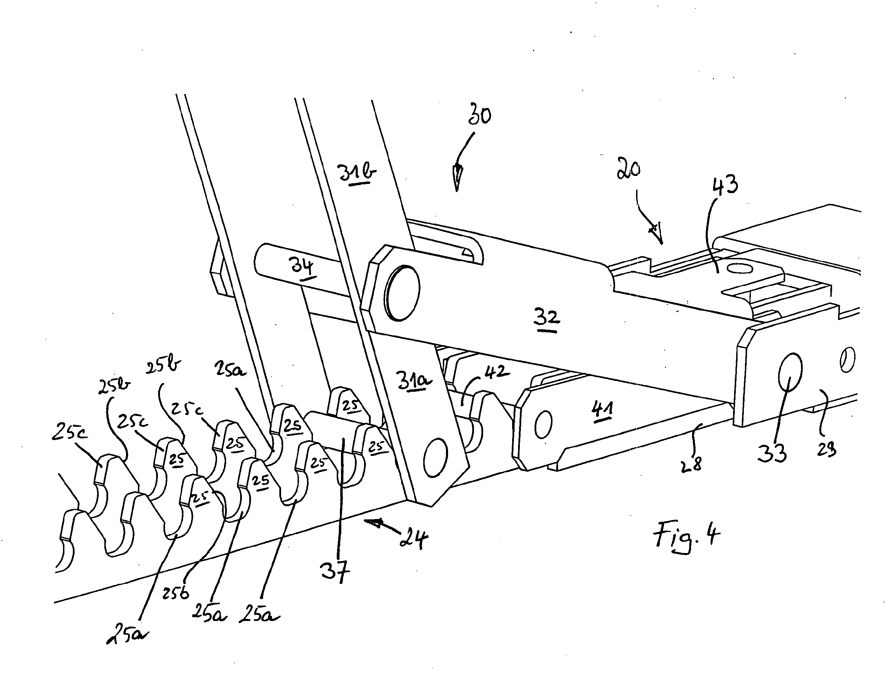

Die Verzahnung 24 besteht aus zwei parallelen Reihen von Zähnen 25. Jeweils ein gegenüberliegendes Paar von Zähnen 25 definiert eine formschlüssige Aufnahme für ein am kurzen Hebelarm 31a des Betätigungshebel 31 angeordnetes, zapfenförmiges Eingriffsende 37 des Betätigungshebels 31, wobei, wie insbesondere in Fig. 4 gut zu erkennen, die Verzahnung 24 in einem Zwischenbereich 25a zwischen benachbarten Zähnen 25 eine Vertiefung aufweist, die an die vorzugsweise abgerundete Form des Eingriffsendes 37 angepasst ist und wegen des hinterschnittenen Charakters ein formschlüssiges Eingreifen des Eingriffsendes 37 erleichtert. Die Flanken der Zähne 25 weisen auf ihrer nach oben gerichteten Seite einen steil abfallenden oberen Rückenabschnitt 25b auf, dem auf der gegenüberliegenden, nach unten weisenden Seite ein weniger steiler Flankenabschnitt 25c vorgesehen ist, der in dem Hinterschnittbereich des Bereichs 25a übergeht. Die Zähne 25 sind insgesamt nach unten geneigt, so dass ein einmal gefangener Zapfen nur dann freigegeben werden kann, wenn die Verzahnung 24 zunächst insgesamt angehoben wird. Die Verzahnung hat eine Ertreckung von ca. einem Meter und weist ca. 20 Zähne auf bzw. Paare von Zähnen auf, die sich glöeichmäßig über die Erstreckung verteilen.

Man erkennt ferner, dass der Betätigungshebel 31 im wesentlichen als U-förmig gefaltetes Blechteil hergestellt ist, bei dem die Zapfen 37 und 34 die Schenkel des U durchsetzen. In ähnlicher Weise ist der Zwischenhebel 32 ebenfalls mit zwei parallelen Schenkeln ausgebildet, die aus einem einstückig ausgebildeten Abschnitt durch Abfalten hergestellt und so miteinander verbunden sind, wobei hier die Schenkel von dem 34 und jeder Schenkel von jeweils einem Achsenabschnitt 33 durchsetzt werden.

An den Achsenabschnitten 33 ist ferner die Verriegelungseinrichtung 40 schwenkbar gelagert. Die Verriegelungseinrichtung 40 umfasst ein schwenkbares Wippenglied 41, das im wesentlichen U-förmig ausgebildet ist und dessen Schenkel jeweils von einem Achsenabschnitt 33 durchsetzt wird, wobei das Wippenglied 41 in der Art eines doppelarmigen Hebels ausgebildet ist, an dessen einem Ende ein Riegelzapfen 42 vorgesehen ist, der mit der Verzahnung 24 zusammengreift, und an dessen anderem Ende ein Auslöseglied 43 vorgesehen ist, welches in Richtung auf die Runge 1 gedrückt werden kann, um den Riegelzapfen 42 außer Eingriff mit der Verzahnung 24 zu bringen. Das Wippenglied 41 ist dabei derart ausgestaltet, dass es seinen Schwerpunkt unterhalb des Lagerzapfens 33 aufweist, so dass aufgrund der durch die Gewichtskraft induzierten Momente der Riegelzapfen 42 stets in Richtung auf die Verzahnung 24 vorgespannt ist und möglichst einen Eingriff zwischen benachbarten Zähnen 25 anstrebt. Es ist möglich, dieses durch Gewichtskraft erzeugte Moment noch durch eine Feder zu verstärken, die vorzugsweise das Auslöseglied 43 entgegen der Auslöserichtung in der Verriegelungseinrichtung 20 vorspannt. In Fig. 5 ist die Hubeinrichtung 30 weggelassen, so dass die Einzelheiten der Verriegelungseinrichtung 20 besser dargestellt sind. Das Auslöseglied 43 ist hierbei aus einem Material von recht schwacher Stärke gebildet, um ein gewaltsames Auskuppeln des Riegelzapfens 42 dadurch zu unterbinden, dass die hierzu erforderliche Kraft eher zu einem Verbiegen des Auslöseglieds 43 führt, als dass der Riegelzapfen 42 aus der Verzahnung 24 gerissen wird. Um ein Eintauchen des Auslöseglieds 43 zu ermöglichen, ist der Bereich 28d ausgeschnitten.

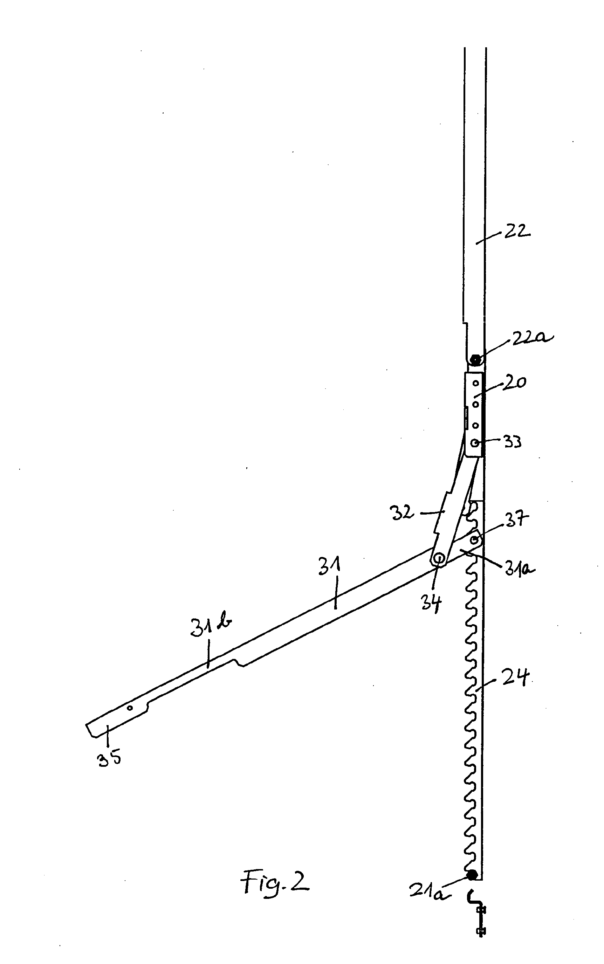

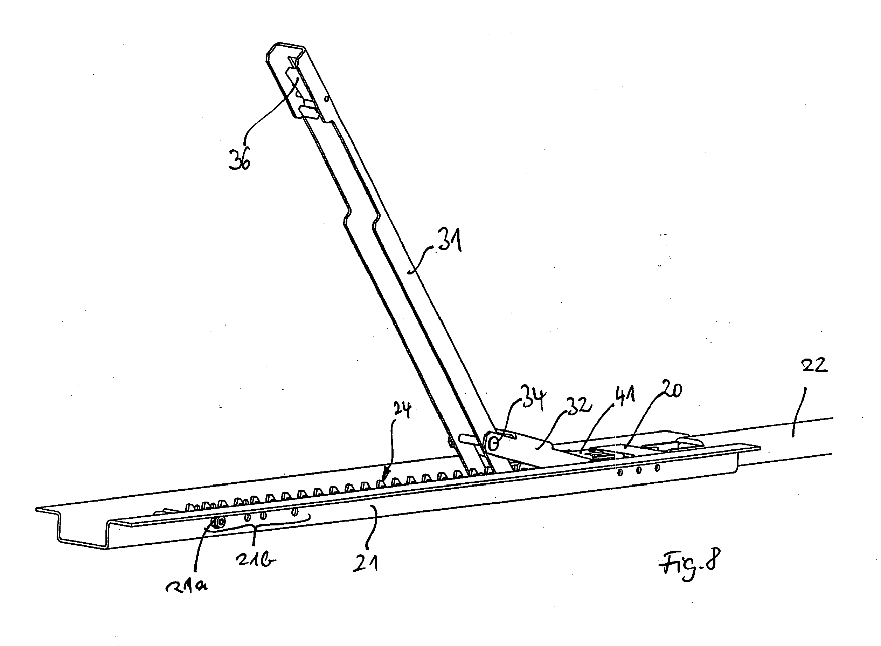

Wie in Fig. 2 zu erkennen, weist das untere Ende des unteren Rungenteils 21 einen Bolzen 21 a auf, der durch eine entsprechende Lochung 21 b in den parallelen Wandungen des unteren Rungenteils 21 hindurchgesteckt ist. Bei ganz nach unten verlagerter Verzahnung 24 kommt diese mit ihrem unteren Bereich auf dem Bolzen 21a zum Ruhen, wodurch eine formschlüssige Auflage des oberen Rungenteils 22 erreicht wird, wobei in dieser Stellung die Hubeinrichtung 30 mit dem Eingriffsteils 37 und die Verriegelungseinrichtung mit dem Riegelzapfen 43 jeweils zumindest weitgehend entlastet sind. Hierbei sind, wie besonders in Fig. 8 zu erkennen, insgesamt vier Lochungen 21b vorgesehen, die bevorzugten Über-Höhen des Verdecks von 0 (unterste Lochung), 50, 75 und 125 mm (oberste Lochung) entsprechen und damit bevorzugten Über-Höhen für einen Fahrbetrieb. Wird der Bolzen 21a in eine weiter oben gelegene Lochung eingesteckt, kann mit entsprechend höherer Höhe bei auf dem Bolzen 21 a aufliegender Verzahnung 24 gefahren werden. Ist die Verzahnung durch die Hubeinrichtung 30 angehoben und/oder die Verriegelungseinrichtung 40 gehalten, kann der Bolzen 21a leicht in einer anderen Höhe angeordnet werden.

Wird mit dem Eingriffsende 37 des Betätigungshebels 31 hinter eine Zahnreihe gegriffen, kann durch Absenken des langen Hebels 31 a mit dem Betätigungshebel 35 der obere Rungenteil 22 mit der Verzahnung 24 durch eine Hubkraft nach oben verlagert werden. Hierbei gleitet der Riegelzapfen 42 über die steile Flanke 25b der entsprechend unter ihm angeordneten Zähne 25 und wird hierbei außer Eingriff gebracht. Wird der Kamm der Zähne 25 überwunden, während der Betätigungshebel 31 das obere Rungenteil 22 weiter anhebt, verschwenkt das Wippenglied 41 hinter die Flanken 25c der nächsten Reihe von Zähnen 25 und greift hernach in den Aufnahmebereich 25a ein. Wird sodann das Anheben des oberen Rungenteils 22 über den Betätigungshebel 31 beendet, schnappt Riegelzapfen 42 in die Verzahnung 24 ein und hält die beiden Rungenteile wieder gegenseitig in vertikaler Richtung. Wie bei einer Ratsche können mehrere Zähne 25 mit einem Hub nacheinander an der Verriegelungseinrichtung 40 vorbei verfahren werden. Wird der Betätigungshebel 31 dann in seine vorstehend beschriebene, im wesentlichen Vertikale Ruhesstellung geschwenkt, greift er hierzu in eine Zahnreihe. Durch die entsprechende Schwenkbewegung und die Dimernsionierung der Teilung der Verzahnung 24 kommt es hierbei stets zu einer Belastung des Betätigungshebels 31, so dass der Riegelzapfen 42 entlastet wird. Die vertikale Kraft wird also bei angehobenem oberen Rungenteil 22, das nicht auf dem Bolzen 21 a ruht, über die Zapfen, Hebel und Gelenke 37, 31, 34, 32, 33 in den Lagerbock 20 und damit in das untere Rungenteil 21 eingeleitet.

Zum Verringern der Höhe der Runge 1 wird ganz entsprechend zunächst der Betätigungshebel 31 zunächst zum Hochschwenken entlastet, wodurch die Verriegelungseinrichtung 40 mit dem Wippenglied 41 und dem Riegelzapfen 42 in die Verzahnung 24 eingreift und die Gewichtskraft in den Lagerbock 20 einleitet. Um das Wippenglied 21 über das Auslöseglied 43 ausser Eingriff mit der Verzahnung 24 bringen zu können, muß der Betätigungshebel 31 die Verzahnung 24 zunächst ein kleines Stück anheben, um den Riegelzapfen 42 lastfrei zu stellen. Dann kann Auslöseglied 43 entgegen der Rückstellkraft der Verriegelungseinrichtung 40 (Eigengewicht oder Feder) gedrückt und damit der der Riegelzapfen 42 ausser Eingriff mit der Verzahnung 24 gebracht werden, Während die Gewichtskraft des oberen Rungenteils 22 auf dem Betätigungshebel 31 lastet, wobei nach Überwinden eines Zahnpaars 25 das Riegelglied 42 in die darüber liegende Ausnehmung 25a einhängt und eine Rastenstellung tiefer die Runge 1 wieder verriegelt. Es ist möglich, das Auslöseglied 43 wiederholt zu drücken oder gedrückt zu halten, durch mehrmaliges Widerholen der entsprechenden Betätigung kann die Runge 1 um mehrere Raststellungen abgesenkt werden.

Eine besonders elegante Verbesserung ergibt sich dann, wenn auch an dem Auslöseglied 43 ein in die Verzahnung 24 eindringendes Sperrglied vorgesehen ist, das in einem derartigen Abstand zu dem Riegelzapfen 42 angeordnet ist, dass es die Verzahnung 24 an einem Durchrutschen hindert, indem es mit der Verzahnung 24 in Eingriff gelangt und diese erst dann wieder freigibt, wenn der Riegelzapfen 42 erneut mit der Verzahnung 24 in Eingriff steht. Auf diese Weise kann durch mehrfaches Betätigen des Auslöseglieds 43 ein Absenken des oberen Rungenteils 22 unter dem Eigengewicht von Runge 1 und Längsträger 4 um jeweils einen Raststellung erreicht werden, wobei aber das Wippenglied 41 stets durch die Hubeinrichtung entlastet sein muss.

Sind alle vier Eckrungen 1 mit entsprechenden Hubeinrichtungen ausgestattet, ermöglicht dies ein reihum sukzessives Anheben der vier Eckrungen und damit ein Erhöhen des gesamten Verdeckgestells 10, ohne dass es durch ein übertriebenes Anheben zu einer Verkantung kommt. Ferner ist sichergestellt, dass in dem Fall, in dem an allen vier Ecken gleichzeitig die Rungen angehoben werden, nicht unter der Gewichtslast des Verdeckgestells die Rungen insgesamt nach unten abrutschen.

Die Erfindung ist vorliegend anhand eines Ausführungsbeispiels erläutert wrden, bei dem nur die Eckrungen 1 in erfindungsgemässer Weise höhenverstellbar ausgebildet sind. Hierbei werden die Mittelrungen 2 für die Dauer der Erhöhung ebenso wie eine vorhandene Seitenplane aus ihren Befestigungen im Bereich der Ladeplattform 11 gelöst und können frei herunterhängen, oder werden ausgehangen. Es versteht sich, dass die Mittelrungen 2 zur Höhenverstellbarkeit in gleicher Weise wir die Eckrungen 1 ausgebildet sein können.

Die Erfindung ist vorstehend anhand eines Ausführungsbeispiels erläutert wrden, bei dem der Lagerbock dem unteren, stationären Rungenteil 21 und die Verzahnung dem oberen, verschieblichen Rungenteil 22 zugeordnet ist, wodurch vorteilhaft eine unabhängig von der Höhe der Runge 1 in konstanter Höhe angeordnete Betätigung erreicht wird. Es versteht sich aber, dass auch eine kinematische Umkehr dahingehend, dass die Verzahnung 24 dem stationäten Teil und eine Führung in der Art des Lagerbocks 20 dem beweglichen Teil zugeordnet werden, eine erfindungsgemäß höhenverstellbare Runge ermöglicht.

Die Erfindung ist vorstehend anhand eines Ausführungsbeispiels erläutert wrden, bei dem der Planenaufbau einen Sattelauflieger überbaut. Es versteht sich, dass in gleicher Weise die Ladepritsche eines Lastkraftwagens oder eines Fahrzeuganhängers oder eines Containers oder eines Eisenbahnwagons überbaut werden kann.

## Patentansprüche

1. Runge für einen Planenaufbau, umfassend
ein erstes Rungenteil (21),
ein zweites Rungenteil (22), und
eine Hubeinrichtung (30), bei der ein Betätigungshebel (31) an einem des ersten und des zweiten Rungenteils (21, 22) angelenkt ist und mit dem anderen des ersten und des zweiten Rungenteils (21, 22) in Eingriff bringbar ist,
**dadurch gekennzeichnet,**
**dass** das andere Rungenteil (21) eine Verzahnung (24) aufweist, in die ein dem Betätigungshebel (31) zugeordnetes Eingriffsende (37) ansetzen kann.

2. Runge nach Anspruch 1, **dadurch gekennzeichnet, dass** eine Verriegelungseinrichtung (40) in die Verzahnung (24) eingreift und diese bei entlasteter Hubeinrichtung (30) hintergreift.

3. Runge nach Anspruch 1 oder 2, **dadurch gekennzeichnet, dass** Zähne der Verzahnung (24) einen hinterschnittenen Bereich (25a) für das formschlüssige Greifen eines Riegelzapfens (42) der Verriegelungseinrichtung (40) und einen abgeschrägt abfallenden Bereich (25b) für das Entlangführen des Riegelzapfens (42) aufweist.

4. Runge nach einem der Ansprüche 1 bis 3, **dadurch gekennzeichnet, dass** die Verzahnung (24) zwei parallele Zahnreihen (25) aufweist.

5. Runge nach einem der Ansprüche 1 bis 4, **dadurch gekennzeichnet, dass** der Betätigungshebel (31) über wenigstens einen Zwischenhebel (32) mit dem ersten Rungenteil (21) schwenkbar verbunden ist.

6. Runge nach Anspruch 5, **dadurch gekennzeichnet, dass** der Zwischenhebel (32) in einem oberen Bereich des ersten Rungenteils (21) angelenkt ist.

7. Runge nach einem der Ansprüche 1 bis 6, **dadurch gekennzeichnet, dass** die Verriegelungseinrichtung (40) ein schwenkbares Wippenglied (41) aufweist, das an einem ersten Hebelarm ein Eingriffsteil (42) für die Verzahnung (24) aufweist.

8. Runge nach Anspruch 7, **dadurch gekennzeichnet, dass** das Wippenglied (41) einen zweiten Hebelarm (43) aufweist, der zur Freigabe des Eingriffsteils (42) von der Verzahnung (24) betätigbar ist.

9. Runge nach Anspruch 7 oder 8, **dadurch gekennzeichnet, dass** die das Wippenglied (41) entgegen der Auslöserichtung durch eine Feder vorgespannt ist.

10. Runge nach einem der Ansprüche 1 bis 9, **dadurch gekennzeichnet, dass** der Betätigungshebel (31) parallel zu der Runge ablegbar ist.

11. Runge nach einem der Ansprüche 1 bis 10, **dadurch gekennzeichnet, dass** ein Lagerbock (20) an dem einen Rungenteil (21) angeordnet ist, an dem die Hubeinrichtung (30) schwenkbar gelagert ist.

12. Runge nach Anspruch 11, soweit auf Anspruch 2 bezogen, **dadurch gekennzeichnet, dass** an dem Lagerbock (20) die Verriegelungseinrichtung (40) gelagert ist.

13. Runge nach Anspruch 11 oder 12, **dadurch gekennzeichnet, dass** der Lagerbock (20) eine Führung für die Verzahnung (24) aufweist.

14. Runge nach einem der Ansprüche 11 bis 13, **dadurch gekennzeichnet, dass** der Lagerbock (20) an dem unteren Rungenteil (21) fest angeordnet ist.

15. Runge nach einem der Ansprüche 1 bis 14, **dadurch gekennzeichnet, dass** das andere Rungenteil (22) gelenkig (22a) mit der Verzahnung (24) verbunden ist.

16. Runge nach einem der Ansprüche 1 bis 15, **dadurch gekennzeichnet, dass** in einem unteren Abschnitt des einen Rungenteils (21) eine Auflage (21 a) für die Verzahnung (24) vorgesehen ist.

17. Runge nach Anspruch 16, **dadurch gekennzeichnet, dass** die Auflage als Bolzen (21a) ausgebildet ist, der durch eine Lochung (21 b) des unteren Rungenteils (21) hindurchsteckbar ist.

18. Runge nach Anspruch 17, **dadurch gekennzeichnet, dass** in dem unteren Abschnitt des unteren Rungenteils (21) mehrere Lochungen (21b) für definierte Höhen vorgesehen sind.

19. Runge nach einem der Ansprüche 16 bis 18, **dadurch gekennzeichnet, dass** die Aufnahme (21a) bei abgesenkter Verzahnung (24) die Gewichtskraft der oberen Rungen (22) in die untere Runge (21) einleitet.

20. Runge nach einem der Ansprüche 1 bis 19, **dadurch gekennzeichnet, dass** die Verzahnung (24) gegenüber der Horizontalen abwärts weisende Zähne (25) aufweist.

21. Runge nach einem der Ansprüche 1 bis 20, **dadurch gekennzeichnet, dass** die Verzahnung wenigstens 5, vorzugsweise mehr als 10 und weniger als 500, am besten zwischen 15 und 25 Zähne aufweist.
